# EUROPÄISCHE PATENTSCHRIFT

(11) **EP 2 691 745 B1**
(45) Veröffentlichungstag und Bekanntmachung des Hinweises auf die Patenterteilung: **04.04.2018**
(21) Anmeldenummer: 12708712.0
(22) Anmeldetag: 19.01.2012
(51) Int. Cl.: G01D 21/00

(54) **POSITIONSMESSEINRICHTUNG**
POSITION MEASURING DEVICE
DISPOSITIF DE MESURE DE POSITION

(30) Priorität: 30.03.2011 DE 102011006424
(43) Veröffentlichungstag der Anmeldung: 05.02.2014
(73) Patentinhaber: Dr. Johannes Heidenhain GmbH, 83301 Traunreut (DE)
(72) Erfinder: TIEMANN, Marc Oliver, A-5020 Salzburg (AT)
(86) Internationale Anmeldenummer: PCT/EP2012/050783
(87) Internationale Veröffentlichungsnummer: WO 2012/130490

(56) Entgegenhaltungen:
- WO-A1-2010/016025
- DE-A1-102008 036 554
- US-A1- 2006 001 315
- US-A1- 2009 253 388

## Beschreibung

Die Erfindung betrifft eine Positionsmesseinrichtung zur Kommunikation mit drahtlosen Peripherieeinheiten nach Anspruch 1.

Positionsmesseinrichtungen sind insbesondere bei Werkzeugmaschinen und in der Automatisierungstechnik weit verbreitet. Sie dienen zur Bestimmung der Absolutposition zweier zueinander beweglicher Objekte. Dabei unterscheidet man prinzipiell zwischen Längen- und Winkelmessgeräten. Längenmessgeräte dienen beispielsweise zur Bestimmung der Absolutposition zweier zueinander beweglicher Maschinenteile einer Werkzeugmaschine. Hierzu wird eine Maßverkörperung, beispielsweise in Form eines Maßstabs mit einer Codespur, mit dem einen und eine Abtasteinheit mit dem anderen der beiden Objekte verbunden, so dass sich durch Abtasten der Codespur das Ausmaß der Bewegung der beiden Objekte zueinander entlang der Codespur bestimmen lässt.

Winkelmessgeräte, auch unter der Bezeichnung Drehgeber bekannt, sind nach dem gleichen Prinzip aufgebaut. An die Stelle des Maßstabs tritt hier aber als Maßverkörperung eine kreisförmige Scheibe, auf deren Umfang die Codespur aufgebracht ist. Die Scheibe ist drehfest mit einer zu messenden Welle verbunden, während die Abtasteinheit hierzu fest montiert ist.

Moderne Positionsmesseinrichtungen generieren absolute Positionswerte und verfügen zur Kommunikation mit einer Folgeelektronik, z.B. einer numerischen Steuerung, über eine digitale, meist serielle Schnittstelle.

Die Erzeugung der Positionssignale kann dabei durch Einsatz von optischen, magnetischen, induktiven oder kapazitiven Abtasteinheiten erfolgen.

In vielen technischen Anwendungsgebieten für Positionsmesseinrichtungen besteht die Notwendigkeit, im Umfeld der Positionsmesseinrichtungen weitere Peripherieeinheiten anzuordnen. Dabei handelt es sich insbesondere um Sensoren zur Messung von Betriebsparametern der Anlage, an der die Positionsmesseinrichtung betrieben wird, beispielsweise Temperatur-, Vibrations-, und Feuchtesensoren. Eine weitere Gruppe von Peripherieeinheiten sind Datenspeicher, in denen systemrelevante Informationen abgelegt bzw. speicherbar sind. Nachdem die Messwerte, bzw. Informationen der Peripherieeinheiten zum einen häufig auch in der Positionsmesseinrichtung benötigt werden und zum anderen die Positionsmesseinrichtung sowieso bereits über eine schnelle serielle Schnittstelle mit der Steuerung verbunden ist, wurde zur Vereinfachung der Verkabelung der Anlage die Möglichkeit geschaffen, Peripherieeinheiten direkt an die Positionsmesseinrichtung anzuschließen und über die Kommunikation zwischen Steuerung und Peripherieeinheiten mit einem erweiterten Schnittstellenprotokoll der schnellen seriellen Schnittstelle zu ermöglichen.

So beschreibt die DE 103 06 231 A1 eine elektronische Zwischenbaugruppe, an die mehrere Peripherieeinheiten anschließbar sind und die über eine zusätzliche Schnittstelle mit der Positionsmesseinrichtung verbunden ist.
Die DE 10 2006 041 056 A1 dagegen beschreibt eine Positionsmesseinrichtung, die neben einem Sensor zur Erfassung des Drehwinkels einer Welle noch weitere Anschlüsse für zusätzliche Sensoren aufweist.

Nachteilig an den bisherigen Lösungen ist es, dass der elektrische Anschluss der Peripherieeinheiten aufwändig ist. Das gilt insbesondere dann, wenn sich die Peripherieeinheiten an beweglichen Einheiten der Anlage befinden.

Es ist daher Aufgabe der Erfindung, eine verbesserte Positionsmesseinrichtung anzugeben.
Diese Aufgabe wird gelöst durch eine Positionsmesseinrichtung nach Anspruch 1. Vorteilhafte Details der Positionsmesseinrichtung ergeben sich aus den von Anspruch 1 abhängigen Ansprüchen.

Es wird nun eine Positionsmesseinrichtung vorgeschlagen, die
- eine Positionserfassungseinheit, mit der Positionssignale, die aus der Abtastung einer Codespur mit einer Abtasteinheit resultieren, zu digitalen Positionswerten verarbeitbar sind,
- eine erste Schnittstelleneinheit zur Kommunikation mit einer Steuereinheit über einen Datenübertragungskanal und
- eine zweite Schnittstelleneinheit zur Kommunikation mit wenigstens einer Peripherieeinheit
umfasst, wobei die erste Schnittstelleneinheit eine drahtgebundene Schnittstelle und die zweite Schnittstelleneinheit eine drahtlose Funkschnittstelle ist.

Weitere Vorteile sowie Einzelheiten der vorliegenden Erfindung ergeben sich aus der nachfolgenden Beschreibung anhand der Figuren. Dabei zeigt
Figur 1 ein Blockdiagramm einer erfindungsgemäßen Positionsmesseinrichtung,
Figur 2 eine erfindungsgemäße Positionsmesseinrichtung in Form eines Längenmessgeräts und
Figur 3 eine erfindungsgemäße Positionsmesseinrichtung in Form eines Antriebsgebers an einem Elektromotor.

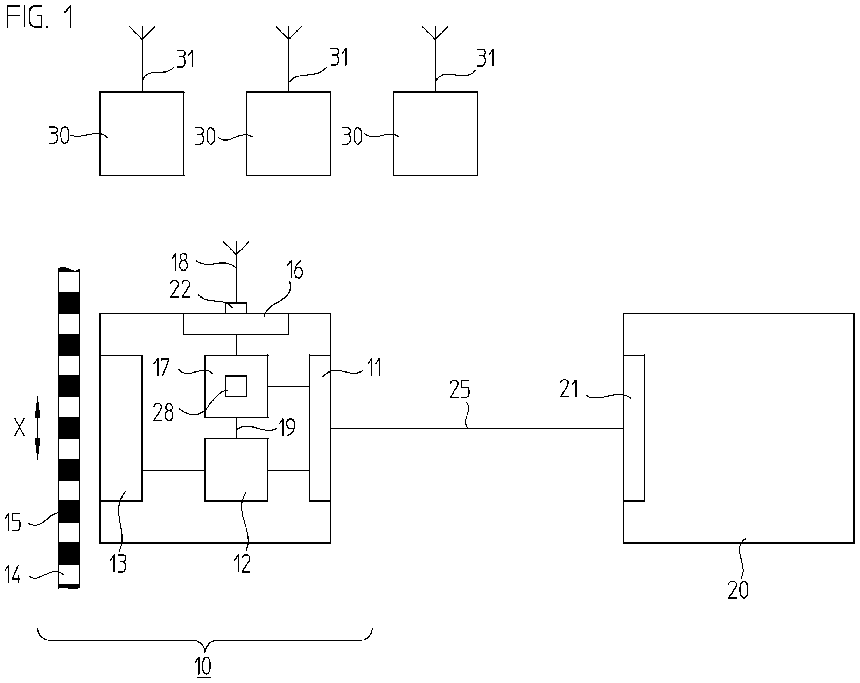

Figur 1 zeigt ein Blockdiagramm einer erfindungsgemäßen Positionsmesseinrichtung 10, zusammen mit einer Steuereinheit 20 und mehreren Peripherieeinheiten 30.

Zur Generierung von Positionswerten umfasst die Positionsmesseinrichtung 10 eine Positionserfassungseinheit 12, die Positionssignale, die eine Abtasteinheit 13 durch Abtastung einer Codespur 15 auf einer Maßverkörperung 14 gewinnt, zu digitalen Positionswerten verarbeitet. Die Maßverkörperung 14, die Codespur 15 und die Abtasteinheit 13 sind entsprechend dem physikalischen Prinzip, das der Abtastung zugrunde liegt, ausgeführt. Handelt es sich beispielsweise um eine optische Durchlicht-Abtastung, besteht die Maßverkörperung aus Glas und die Codespur 15 ist durch transparente und opake Bereiche gebildet. Durch Abbildung der Codespur 15 in einem Abbildungsfenster mittels einer Lichtquelle auf Photodetektoren in der Abtasteinheit 13 werden die Abtastsignale gewonnen, die in der Positionserfassungseinheit zu digitalen Positionswerten verarbeitet werden.

Das physikalische Abtastprinzip ist für die vorliegende Erfindung nicht relevant. Neben optischen können auch magnetische, induktive oder kapazitive Abtastprinzipien eingesetzt werden. Ebenso kann die Codespur 15 sowohl inkremental oder absolut codiert sein. Entscheidend ist, dass die Positionserfassungseinheit 12 die Positionssignale, die die Abtasteinheit 13 erzeugt, zu digitalen Positionswerten verarbeitet.

Die Positionsmesseinrichtung 10 verfügt zur Kommunikation mit einer Steuereinheit 20 über eine erste Schnittstelleneinheit 11, die über einen Datenübertragungskanal 25 mit einer Steuerungsschnittstelle 21 der Steuereinheit 20 verbunden ist. Die Datenübertragung erfolgt in serieller Form und ist mit Vorteil bidirektional, so dass die Möglichkeit besteht, sowohl Daten von der Positionsmesseinrichtung 10 anzufordern, als auch zur Positionsmesseinrichtung 10 zu übertragen. Zur Steuerung der Kommunikation sind Befehle festgelegt, die von der Steuereinheit 20 zur ersten Schnittstelleneinheit 11 übertragen werden und die bestimmen, ob ein Schreib- oder Lesezugriff erfolgt, Besonders gut geeignet ist die Datenübertragung nach dem EnDat-Standard.

Erfindungsgemäß ist in der Positionsmesseinrichtung 10 eine zweite Schnittstelleneinheit 16 angeordnet, die eine Funkschnittstelle ist. Die zweite Schnittstelleneinheit 16 ist somit geeignet, ohne direkte Verbindung durch elektrische Leitungen mit einer beliebigen Anzahl von Peripherieeinheiten 30, von denen in Figur 1 beispielhaft drei dargestellt sind, zu kommunizieren.

Bei den Peripherieeinheiten 30 handelt es sich beispielsweise um Sensoren zur Messung physikalischer Größen. Prominente Beispiele solcher Sensoren sind Temperatur-, Vibrations-, Beschleunigungs-, Luftfeuchte- und Luftdrucksensoren. Auch Sensoren zum Feststellen von Verformungen an mechanischen Komponenten wie Maschinenteilen, aber auch zu bearbeitenden Werkstücken, sind an dieser Stelle zu nennen.

Ein weiteres Beispiel für Peripherieeinheiten 30 sind Datenspeicher. Geeignet sind sowohl Festspeicher (ROM), als auch wiederbeschreibbare Speicher (EEPROM, Flashspeicher, FRAM, ...). Erstere können beispielsweise als sogenanntes elektronisches Typenschild verwendet werden, letztere zum Speichern und wieder Auslesen von Betriebsinformationen, die während der Laufzeit der Maschine, an der die Positionsmesseinrichtung 10 betrieben wird, gewonnen werden.

Die Peripherieeinheiten 30 können sowohl aktiv, als auch passiv sein. Aktive Peripherieeinheiten 30 benötigen zur Kommunikation mit der zweiten Schnittstelleneinheit 16 der Positionsmesseinrichtung 10 eine Batterie oder eine andere Stromversorgung. Passive, oder energieautarke, Peripherieeinheiten 30 gewinnen die zur Kommunikation mit der zweiten Schnittstelleneinheit 16 benötigte Betriebsspannung beispielsweise aus der Energie des von der zweiten Schnittstelleneinheit 16 gesendeten elektromagnetischen Feldes, oder aus anderen zur Verfügung stehenden Energiequellen, wie Umgebungstemperatur, Vibrationen, Druck oder Luftströmungen. Diese Methode, aus derartigen Energiequellen eine Betriebsspannung zu generieren, ist unter dem Fachbegriff "energy harvesting" bekannt.

Mit Vorteil ist zwischen der ersten Schnittstelleneinheit 11 und der zweiten Schnittstelleneinheit 16 eine Kommunikationseinheit 17 angeordnet. Die Kommunikationseinheit 17 ist besonders dann sinnvoll, wenn die Schnittstelleneinheiten 11, 16 verschiedene Verarbeitungsgeschwindigkeiten, bzw. -prioritäten aufweisen. In der Praxis ist es häufig so, dass die Steuereinheit 20 kontinuierlich Positionswerte von der Positionsmesseinrichtung 10 als Positionsistwerte für einen Regelkreis benötigt. Für hochdynamische Regelvorgänge ist es entscheidend, möglichst schnell aktuelle Positionswerte zu erhalten, um Totzeiten der Regelung zu minimieren. Aus diesem Grund fordert die Steuereinheit 20 beim Betrieb der von ihr gesteuerten Maschine über den Datenübertragungskanal 25 und die erste Schnittstelleneinheit 11 in kurzen zeitlichen Abständen Positionswerte von der Positionsmesseinrichtung 10 an. Die Anforderung von Positionswerten ist daher zeitkritisch und hat somit eine hohe Priorität. Die Kommunikation mit Peripherieeinheiten 30 ist dagegen meist zeitunkritisch, da sich Messwerte von Peripherieeinheiten 30 (wenn es sich um Sensoren handelt) nur langsam und Speicherwerte (wenn es sich um Datenspeicher handelt) naturgemäß überhaupt nicht verändern. Darüber hinaus sind Funkschnittstellen häufig langsamer als drahtgebundene Schnittstellen, so dass sich bei einer direkten Anforderung, beispielsweise eines Sensorwerts, von der Steuereinheit 20 über die erste Schnittstelleneinheit 11 zur zweiten Schnittstelleneinheit 16 eine Wartezeit ergeben würde, während der die erste Schnittstelleneinheit 11 blockiert wäre und nicht zur Übertragung von Positionswerten zur Verfügung stünde.

Um eine derartige Blockierung der ersten Schnittstelleneinheit 11 zu vermeiden, kann die Kommunikationseinheit 17 so ausgestaltet sein, dass sie Befehle, die an eine Peripherieeinheit 30 gerichtet sind, von der ersten Schnittstelleneinheit 11 empfängt, die Kommunikation mit der Peripherieeinheit 30 selbständig abarbeitet und von der Peripherieeinheit 30 eintreffende Eingangsdaten in einer Speichereinheit 28, z.B. einem Register, zwischenspeichert, bis sie die erste Schnittstelleneinheit 11 zu einem späteren Zeitpunkt abholt.

Ebenso können Ausgabedaten, die von der Steuereinheit an eine Peripherieeinheit 30 gesendet werden sollen, in der Speichereinheit 28 zwischengespeichert werden, bis die Ausgabe an die entsprechende Peripherieeinheit 30 erfolgt.

Zu den Ein- und/oder Ausgangsdaten kann eine Zuordnungsinformation mit abgespeichert werden.

Handelt es sich bei den Peripherieeinheiten 30 um Sensoren, ist es besonders vorteilhaft, wenn die Kommunikationseinheit 17 auch ohne Anforderungsbefehl der Steuereinheit 20 in bestimmten Zeitabständen Messwerte von den Peripherieeinheiten 30 anfordert und in der Speichereinheit 28 zur Verfügung stellt. Trifft nun über die erste Schnittstelleneinheit 11 ein Anforderungsbefehl für Sensordaten von der Steuereinheit 20 ein, kann unmittelbar ein gespeicherter, ausreichend aktueller, Messwert zur Steuereinheit 20 übertragen werden.

Um Daten von den Peripherieeinheiten 30 direkt in der Positionsmesseinrichtung 10 verarbeiten zu können, können die Kommunikationseinheit 17 und die Positionserfassungseinheit 12 über eine Datenverbindung 19 zum Zwecke der Datenübertragung miteinander verbunden sein. Auf diese Weise ist es beispielsweise möglich, Messwerte eines oder mehrerer Temperatursensoren in der Positionserfassungseinheit 12 zur Korrektur des Positionswerts zu verwenden, oder Daten aus einem Datenspeicher ("elektronisches Typenschild") zur Konfiguration der Positionsmesseinrichtung 10, bzw. zu deren Anpassung an die Maschine, an der sie betrieben wird, zu nutzen.

Die zweite Schnittstelleneinheit 16 ist zum Senden und Empfangen von Funkwellen mit einer Hauptantenne 18 verbunden, die entsprechend dem Übertragungsstandard, bzw. dem Arbeitsfrequenzbereich der Funkschnittstelle dimensioniert ist. Insbesondere kann es sich bei der Hauptantenne 18 um eine Dipolantenne oder um eine Spiralantenne handeln, die ggf. durch Leiterbahnen auf einer Leiterplatte gebildet ist. Abhängig von Lage und Anordnung der Peripherieeinheiten 30 kann die Hauptantenne 18 auch direkt in das Gehäuse der Positionsmesseinrichtung 10 integriert sein. Besonders vorteilhaft ist es in diesem Fall, die Hauptantenne 18 als Schlitzantenne auszuführen. Ebenso kann die Hauptantenne 18 von der Positionsmesseinrichtung 10 beabstandet angebracht sein, etwa um abschirmendes Material zu umgehen, das sich zwischen der Positionsmesseinrichtung 10 und den Peripherieeinheiten 30, mit denen die Positionsmesseinrichtung 10 kommunizieren soll, befindet. Mit Vorteil ist in diesem Fall an der Positionsmesseinrichtung 10 ein Steckverbinder 22, z.B. ein Koaxialsteckverbinder, vorgesehen, damit die Verbindung zwischen der Hauptantenne 18 über ein geeignetes Kabel mit dem Steckverbinder 22 lösbar ist. Als Gegenstücke zur Hauptantenne 18 der Positionsmesseinrichtung 10 sind an den Peripherieeinheiten 30 Peripherieantennen 31 angeordnet.

Besonders vorteilhaft ist es, die zweite Schnittstelleneinheit 16 als RFID-Leseeinheit, bzw. -Schreib-/Leseeinheit auszuführen und als Peripherieeinheiten 30 RFID-Transponder einzusetzen. RFID-Technologie ist weit verbreitet, kostengünstig verfügbar und zuverlässig. Außerdem ist diese Technologie besonders geeignet, um energieautarke Peripherieeinheiten 30 einzusetzen, die die für ihren Betrieb benötigte Energie den von der zweiten Schnittstelleneinheit 16 ausgesendeten Funkwellen entziehen.

Alternativ kann die zweite Schnittstelleneinheit 16 als Near Field Communication Schnittstelle, Bluetooth Schnittstelle, ZigBee Schnittstelle, oder Leseeinheit für SAW-Sensoren ausgebildet sein.

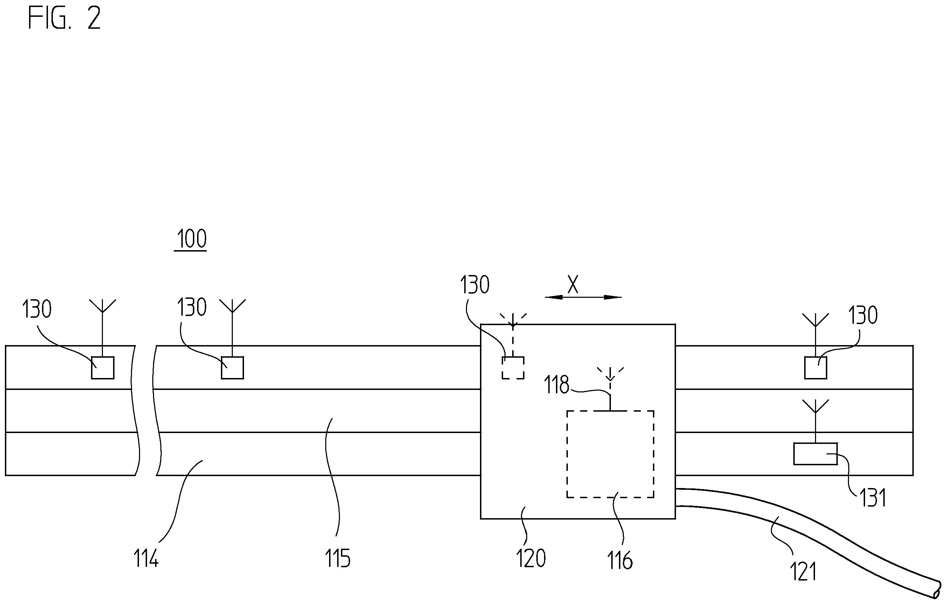

Figur 2 zeigt eine erfindungsgemäße Positionsmesseinrichtung in Form eines Längenmessgeräts 100. Es umfasst als Maßverkörperung einen Maßstab 114 mit einer Codespur 115, sowie einen Abtastkopf 120. Weiter ist ein Anschlusskabel 121 angedeutet, über das die Positionsmesseinrichtung 100 mit einer Steuereinheit 20 verbindbar ist. Das Anschlusskabel 121 umfasst beispielsweise den Datenübertragungskanal 25 für die Datenübertragung zwischen der ersten Schnittstelleneinheit 11 und der Steuerungsschnittstelle 21, sowie Versorgungsleitungen, die den Abtastkopf 120 mit einer Betriebsspannung versorgen. Aus Gründen der Übersichtlichkeit ist im Abtastkopf 120 nur die zweite Schnittstelleneinheit 116 mit der Hauptantenne 118 dargestellt. Auf die Darstellung der übrigen Komponenten (erste Schnittstelleneinheit 11, Positionserfassungseinheit 12, Abtasteinheit 13 und Kommunikationseinheit 17) wurde verzichtet. Zum Betrieb an einer Maschine ist der Maßstab 114 an einem ersten Maschinenteil montiert und der Abtastkopf 120 an einem zweiten Maschinenteil. Bei einer Relativbewegung des ersten Maschinenteils gegenüber dem zweiten Maschinenteil in einer Messrichtung X bewegt sich der Abtastkopf 120 (und somit die nicht dargestellte Abtasteinheit 13) entlang der Codespur 115 des Maßstabs 114. Die auf diese Weise generierten Positionssignale werden, wie in den Ausführungen zu Figur 1 bereits beschrieben, verarbeitet.

Entlang dem Maßstab 114 sind in regelmäßigen Abständen Peripherieeinheiten 130 in Form von Temperatursensoren angeordnet. Durch die drahtlose Kommunikation zwischen den Temperatursensoren und der zweiten Schnittstelleneinheit 116 ist es nun sehr komfortabel möglich, die Temperaturverteilung entlang des Maßstabes 114 zu bestimmen und ggf. zur Korrektur der Positionswerte mit einzubeziehen. Dies kann sowohl in der Steuereinheit 20 erfolgen, als auch bereits im Abtastkopf 120, beispielsweise in der Positionserfassungseinheit 12, der die Temperaturwerte von der Kommunikationseinheit 17 über die Datenverbindung 19 zugeführt werden. Letzteres ist besonders vorteilhaft, da hier keine Notwendigkeit besteht, neben den Positionswerten auch noch Temperaturwerte zur Steuereinheit 20 zu übertragen.

Mit Vorteil sind die Peripherieeinheiten 130 in diesem Ausführungsbeispiel passive Sensoren, da in diesem Fall vollständig auf eine externe Verdrahtung der Peripherieeinheiten 130 verzichtet werden kann. Im Gegensatz dazu müssten bei einer Lösung entsprechend dem Stand der Technik jeder Peripherieeinheit 130 wenigstens zwei Leitungen zugeführt sein und, entweder separat oder in Form einer Busverbindung, mit dem Abtastkopf 120, oder direkt mit der Steuereinheit 20 verbunden werden.
Alternativ können die Peripherieeinheiten 130 natürlich auch an beliebigen Maschinenteilen, oder sogar an einem zu bearbeitenden Werkstück angebracht werden, um Temperaturschwankungen zu erkennen und ggf. zu korrigieren.

Selbstverständlich ist dieses Ausführungsbeispiel nicht auf Temperatursensoren eingeschränkt, es können auch andere Arten von Sensoren verwendet werden, beispielsweise Vibrationssensoren zum Feststellen von unzulässigen Vibrationen an der Maschine, etwa hervorgerufen durch ein "Rattern" eines Fräskopfes oder ein defektes Lager.

Je nach Ausführung der zweiten Schnittstelleneinheit 116 und ggf. der Hauptantenne 118 kann die Reichweite der Kommunikation so groß gewählt werden, dass alle Peripherieeinheiten 130 an jeder Position des Abtastkopfes 120 erreicht werden können. Es kann jedoch auch vorteilhaft sein, die Reichweite der zweiten Schnittstelleneinheit 116 sehr klein zu wählen, so dass lediglich Peripherieeinheiten 130 in unmittelbarer Umgebung des Abtastkopfes 120 ausgelesen werden können, beispielsweise um lokale Temperaturschwankungen zu erfassen.

In Figur 2 ist noch eine weitere Peripherieeinheit 131 dargestellt, die ein Datenspeicher ist. Der Datenspeicher kann Informationen enthalten, die die Positionsmesseinrichtung 100 selbst betreffen, aber auch die Maschine, an der die Positionsmesseinrichtung 100 betrieben wird. So kann der Datenspeicher 131 beispielsweise Korrekturdaten enthalten, die die Maßverkörperung 114 und insbesondere die Codespur 115 beschreiben und die die Positionserfassungseinheit 12 benötigt, um Positionswerte optimal korrigieren zu können. Dies ist besonders bei sogenannten offenen Längenmessgeräten sinnvoll, da bei diesen der Anbau des Maßstabs an die Maschine und die Montage und Justierung des Abtastkopfes 120 relativ zur Codespur 115 meist erst beim Kunden erfolgt. Durch den Einsatz eines Datenspeichers 131, der drahtlos, sowohl in Bezug auf die Datenübertragung, als auch in Bezug auf die Spannungsversorgung, über die Funkschnittstelle auslesbar ist, kann die Anpassung des Abtastkopfes 120 an die Maßverkörperung 114 automatisiert erfolgen und ist somit kundenfreundlich und sicher möglich.

Der Datenspeicher 131 kann als Nur-Lese-Speicher (ROM) oder als Schreib-/Lesespeicher (z.B. EEPROM, Flash-Speicher, FRAM, ...) ausgeführt sein. Im letzteren Fall können im Datenspeicher 131 Informationen, die den Betrieb der Positionsmesseinrichtung 10 betreffen, abgespeichert werden, beispielsweise eine Seriennummer des Abtastkopfes 120, das Datum der Inbetriebnahme, oder die Anzahl der Betriebsstunden.

Besonders im Fall des Datenspeichers 131 kann es sinnvoll sein, die Reichweite der zweiten Schnittstelleneinheit 116 zu begrenzen, da der Inhalt des Datenspeichers ja direkt die Positionsmesseinrichtung 100 betrifft. Damit wird verhindert, dass, wenn zwei gleichartige Positionsmesseinrichtungen 100 mit Datenspeicher 131 in räumlicher Nähe zueinander montiert werden, versehentlich der falsche Datenspeicher 131 für die Anpassung zwischen Maßstab 114 und Abtastkopf 120 verwendet wird. Besonders vorteilhaft ist es hier, die Hauptantenne 118 der zweiten Schnittstelleneinheit 116 auf der dem Maßstab 114 zugewandten Seite des Abtastkopfes 120 anzuordnen.

Mit Vorteil handelt es sich beim Datenspeicher 131 um einen RFID-Transponder und bei der zweiten Schnittstelleneinheit 116 um ein RFID-Lesegerät, bzw. Schreib-/Lesegerät, wobei das System als sog. Close-Coupling-System mit wenigen Zentimetern Reichweite dimensioniert ist.

Ebenso besonders vorteilhaft ist es, als zweite Schnittstelleneinheit 116 eine Near Field Communication (NFC) Schnittstelle vorzusehen und den Datenspeicher 131 als NFC-Transponder auszuführen.

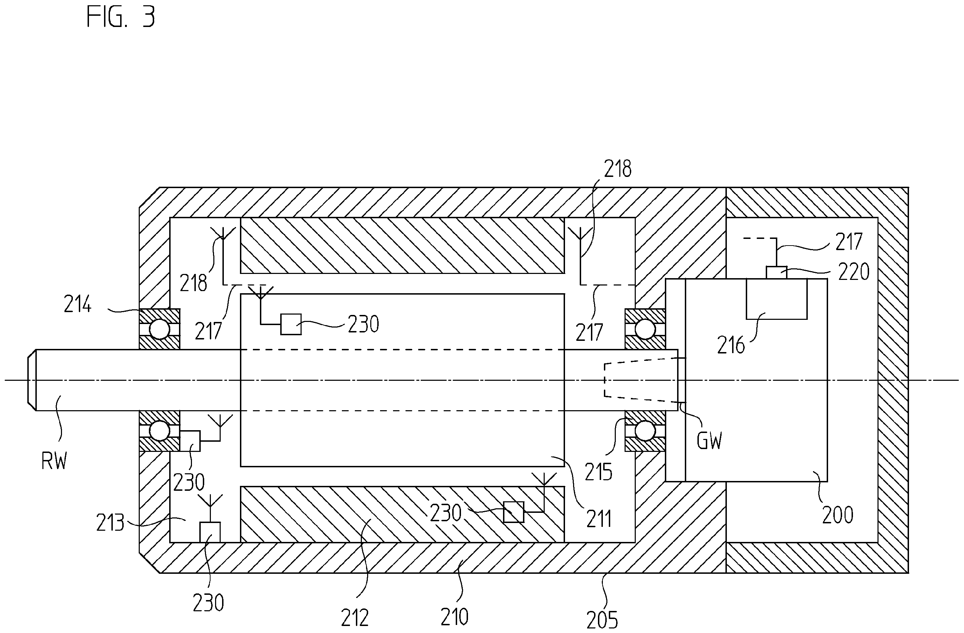

Figur 3 zeigt eine erfindungsgemäße Positionsmesseinrichtung in Form eines Antriebsgebers 200. Der Antriebsgeber 200 ist an einen Elektromotor 205 angebaut. Der Elektromotor 205 umfasst einen Rotor 211 mit einer Rotorwelle RW, sowie Statorwicklungen 212. Die Rotorwelle RW ist an zwei Stellen mittels Radiallagern 214, 215 um ihre Drehachse drehbar gelagert. Bevorzugt sind die Radiallager 214, 215 Wälzlager, insbesondere Kugellager. Die Rotorwelle RW des Rotors 211 des Elektromotors 205 ist mit einer Geberwelle GW des Antriebsgebers 200 drehfest verbunden. Das Gehäuse des Antriebsgebers 200 ist am Motorgehäuse 210 des Elektromotors 205 fixiert, so dass mit dem Antriebsgeber 200 der Drehwinkel, bzw. die Anzahl der vollständigen Umdrehungen der Rotorwelle RW bezogen auf das Motorgehäuse 210 messbar ist. Das Funktionsprinzip des Antriebsgebers 200 basiert auf der Abtastung einer Codespur, die radial auf einer kreisförmigen Scheibe, die die Maßverkörperung darstellt, angeordnet ist, wobei der Mittelpunkt der Scheibe wiederum drehfest mit der Rotationsachse der Geberwelle GW verbunden ist. Dieses Prinzip ist dem Fachmann hinlänglich bekannt und wird hier nicht weiter ausgeführt.

Der Aufbau des Antriebsgebers 200 entspricht dem der Positionsmesseinrichtung 10 aus Figur 1. Auf die Darstellung von Komponenten, die für die Beschreibung der Ausführungsform in Figur 3 nicht relevant sind (Maßverkörperung 14, erste Schnittstelleneinheit 11, Positionserfassungseinheit 12, Abtasteinheit 13 und Kommunikationseinheit 17) wurde wiederum verzichtet. Erfindungsgemäß ist lediglich die zweite Schnittstelleneinheit 216 dargestellt. Im Motorinnenraum 213 des Elektromotors 205 sind mehrere Peripherieeinheiten 230 angeordnet, die zur Überwachung des Zustands des Elektromotors 205 dienen. Insbesondere handelt es sich bei den Peripherieeinheiten 230 an den Axiallagern 214, 215 um Vibrationssensoren, am Motorgehäuse 210, im Rotor 211 und in den Statorwicklungen 212 um Temperatursensoren.

Da sich bei einer derartigen Anordnung üblicherweise zwischen dem Antriebsgeber 200 und dem Motorinnenraum 213 abschirmendes Material (z.B. das Motorgehäuse 210) befindet, ist in diesem Beispiel wenigstens eine Hauptantenne 218 im Motorinnenraum 213 angeordnet und über ein Antennenkabel 217 mit der zweiten Schnittstelleneinheit 216 des Antriebsgebers 200 verbunden. Für die Verlegung des Antennenkabels 217 sind im Motorinnenraum 213 beispielsweise geeignete Aussparungen vorgesehen. Um die Verbindung lösbar zu gestalten, erfolgt der Anschluss über einen Steckverbinder 220.

Die vorliegende Erfindung ist selbstverständlich nicht auf die beschriebenen Ausführungsbeispiele eingeschränkt. Im Rahmen der Erfindung existieren vielfältige weitere Varianten erfindungsgemäßer Positionsmesseinrichtungen.

## Patentansprüche

1. Positionsmesseinrichtung (10, 100, 200), umfassend
• eine Positionserfassungseinheit (12), mit der Positionssignale, die aus der Abtastung einer Codespur (15, 115) mit einer Abtasteinheit (13) resultieren, zu digitalen Positionswerten verarbeitbar sind,
• eine erste Schnittstelleneinheit (11) zur Kommunikation mit einer Steuereinheit (20) über einen Datenübertragungskanal (25) und
• eine zweite Schnittstelleneinheit (16, 116, 216) zur Kommunikation mit wenigstens einer Peripherieeinheit (30, 130, 131, 230),
wobei die erste Schnittstelleneinheit (11) eine drahtgebundene Schnittstelle und die zweite Schnittstelleneinheit (16, 116, 216) eine drahtlose Funkschnittstelle ist und wobei die erste Schnittstelleneinheit (11) mit der Positionserfassungseinheit (12) verbunden ist und eine Kommunikationseinheit (17) vorgesehen ist, die mit der zweiten Schnittstelleneinheit (16, 116, 216) verbunden ist und mit der die Kommunikation mit der wenigstens einen Peripherieeinheit (30, 130, 131, 230) steuerbar ist und wobei die Kommunikationseinheit (17) weiter mit der ersten Schnittstelleneinheit (11) verbunden ist und die Kommunikationseinheit (17) über die erste Schnittstelleneinheit (11) steuerbar ist.

2. Positionsmesseinrichtung nach Anspruch 1, wobei in der Kommunikationseinheit (17) eine Speichereinheit (28) angeordnet ist, in der Ein- und/oder Ausgangsdaten der wenigstens einen Peripherieeinheit (30, 130, 131, 230) speicherbar sind.

3. Positionsmesseinrichtung nach einem der vorhergehenden Ansprüche, wobei die Kommunikationseinheit (17) weiter zum Zwecke des internen Datenaustausches mit der Positionserfassungseinheit (12) verbunden ist.

4. Positionsmesseinrichtung nach einem der vorhergehenden Ansprüche, wobei die zweite Schnittstelleneinheit (16, 116, 216) eine Hauptantenne (18, 118, 218) umfasst.

5. Positionsmesseinrichtung nach Anspruch 4, wobei die Hauptantenne (18, 118, 218) mittels eines Steckerbinders (22, 220) an die zweite Schnittstelleneinheit (16, 116, 216) anschließbar ist.

6. Positionsmesseinrichtung nach einem der vorhergehenden Ansprüche, wobei die zweite Schnittstelleneinheit (16, 116, 216) als
• RFID-Lese- oder -Schreib-/Leseeinheit, oder
• Near Field Communication Schnittstelle, oder
• Bluetooth Schnittstelle, oder
• ZigBee Schnittstelle, oder
• Leseeinheit für SAW-Sensoren
ausgebildet ist.

## Claims

1. Position measuring device (10, 100, 200) comprising
• a position detection unit (12) which can be used to process position signals, which result from scanning a code track (15, 115) using a scanning unit (13), to form digital position values,
• a first interface unit (11) for communicating with a control unit (20) via a data transmission channel (25), and
• a second interface unit (16, 116, 216) for communicating with at least one peripheral unit (30, 130, 131, 230),
wherein the first interface unit (11) is a wired interface and the second interface unit (16, 116, 216) is a wireless radio interface, and wherein the first interface unit (11) is connected to the position detection unit (12), and a communication unit (17) is provided, which communication unit is connected to the second interface unit (16, 116, 216) and can be used to control the communication with the at least one peripheral unit (30, 130, 131, 230), and wherein the communication unit (17) is also connected to the first interface unit (11) and the communication unit (17) can be controlled via the first interface unit (11).

2. Position measuring device according to Claim 1, wherein a memory unit (28) which can store input and/or output data of the at least one peripheral unit (30, 130, 131, 230) is arranged in the communication unit (17) .

3. Position measuring device according to one of the preceding claims, wherein the communication unit (17) is also connected to the position detection unit (12) for the purpose of internal data interchange.

4. Position measuring device according to one of the preceding claims, wherein the second interface unit (16, 116, 216) comprises a main antenna (18, 118, 218).

5. Position measuring device according to Claim 4, wherein the main antenna (18, 118, 218) can be connected to the second interface unit (16, 116, 216) by means of a plug connector (22, 220).

6. Position measuring device according to one of the preceding claims, wherein the second interface unit (16, 116, 216) is in the form of
• an RFID reading or writing/reading unit, or
• a near field communication interface, or
• a Bluetooth interface, or
• a ZigBee interface, or
• a reading unit for SAW sensors.

## Revendications

1. Dispositif de mesure de position (10, 100, 200), comprenant
• une unité d'acquisition de position (12), avec laquelle des signaux de position qui résultent du palpage d'une poste de code (15, 115) avec une unité de palpage (13) peuvent être traités pour obtenir des valeurs de position numériques,
• une première unité d'interface (11) destinée à la communication avec une unité de commande (20) par le biais d'un canal de transmission de données (25) et
• une deuxième unité d'interface (16, 116, 216) destinée à la communication avec au moins une unité périphérique (30, 130, 131, 230),
la première unité d'interface (11) étant une interface filaire et la deuxième unité d'interface (16, 116, 216) étant une interface radioélectrique sans fil, et la première unité d'interface (11) étant reliée à l'unité d'acquisition de position (12) et une unité de communication (17) étant présente, laquelle est reliée à la deuxième unité d'interface (16, 116, 216) et laquelle permet de commander la communication avec l'au moins une unité périphérique (30, 130, 131, 230) et l'unité de communication (17) étant en outre reliée à la première unité d'interface (11) et l'unité de communication (17) pouvant être commandée par le biais de la première unité d'interface (11).

2. Dispositif de mesure de position selon la revendication 1, une unité à mémoire (28) étant disposée dans l'unité de communication (17), dans laquelle peuvent être enregistrées des données d'entrée et/ou de sortie de l'au moins une unité périphérique (30, 130, 131, 230).

3. Dispositif de mesure de position selon l'une des revendications précédentes, l'unité de communication (17) étant en outre reliée à l'unité d'acquisition de position (12) en vue de l'échange de données interne.

4. Dispositif de mesure de position selon l'une des revendications précédentes, la deuxième unité d'interface (16, 116, 216) comportant une antenne principale (18, 118, 218).

5. Dispositif de mesure de position selon la revendication 4, l'antenne principale (18, 118, 218) pouvant être raccordée à la deuxième unité d'interface (16, 116, 216) au moyen d'un connecteur (22, 220).

6. Dispositif de mesure de position selon l'une des revendications précédentes, la deuxième unité d'interface (16, 116, 216) étant réalisée sous la forme
• d'une unité de lecture ou d'écriture/lecture de RFID, ou
• d'une interface de communication en champ proche,
ou
• d'une interface Bluetooth, ou
• d'une interface zigBee, ou
• d'une unité de lecture pour des capteurs SAW.
